# FASCICULE DE BREVET EUROPEEN

(11) **EP 3 610 061 B1**
(45) Date de publication et mention de la délivrance du brevet: **06.09.2023**
(21) Numéro de dépôt: 18721089.3
(22) Date de dépôt: 12.04.2018
(51) Int. Cl.: A43B 1/04, D03D 11/02, A43B 23/02

(54) **TISSU INTEGRANT AU MOINS UN ELEMENT DE LIAGE**
GEWEBE MIT MINDESTENS EINEM BINDEELEMENT
FABRIC INCORPORATING AT LEAST ONE BINDING ELEMENT

(30) Priorité: 12.04.2017 FR 1753196
(43) Date de publication de la demande: 19.02.2020
(73) Titulaire: Chamatex, 07290 Ardoix (FR)
(72) Inventeur: REGUILLON, Gilles, 38550 Saint Maurice L'Exil (FR); BOSSIS, Sylvain, 38150 Chanas (FR); CASTRO, Matéo, 69007 Lyon (FR); LAVERTY, Grégoire, 69007 Lyon (FR); BARRE, Bertrand, 01330 Lapeyrouse (FR)
(74) Mandataire: Talbot, Alexandre
(86) Numéro de dépôt international: PCT/FR2018/050932
(87) Numéro de publication internationale: WO 2018/189494

(56) Documents cités:
- CA-A1- 2 183 748
- DE-A1- 4 403 272
- DE-B- 1 277 765
- US-A- 236 059
- US-A1- 2014 173 932
- US-B1- 8 959 959

## Description

La présente invention concerne le secteur des tissus, en particulier celui des tissus, techniques ou non, mis en oeuvre, confectionnés ou ouvrés pour obtenir différents produits finis, objets, ou articles, à usage domestique, industriel, ou professionnel.

La présente invention sera introduite et explicitée par référence au secteur technique des articles chaussants, ou chaussures, sans qu'il faille considérer que cette invention doive être limitée à ce secteur, concernant ses applications en particulier.

Classiquement, tout article chaussant comprend :
- une semelle,
- une tige constituée traditionnellement par une pluralité de pièces découpées dans différentes matières (textile, matière plastique en film ou en feuille, cuir, etc.), assemblées les unes aux autres, par différents moyens, tels que couture, collage, etc.,
- un moyen de fermeture du volume intérieur de la tige, comprenant de manière générale, d'une part, deux séries d'éléments de liage ou laçage, de part et d'autre d'une échancrure de la tige, comblée ou non par une languette, et d'autre part un lien, ou lacet, reliant ou traversant lesdits éléments de liage, en enjambant cette échancrure.

En pratique, s'agissant spécifiquement du moyen de fermeture, différentes solutions sont aujourd'hui mises en oeuvre, au rang desquelles, par ordre de complexité croissante :
a) lorsque les deux bordures de l'échancrure sont en cuir, ou en matière plastique injectée, celles-ci sont perforées, pour permettre le passage du lacet ;
b) lorsque la tige est obtenue à partir d'un matériau synthétique, léger et technique, tel un tissu technique, des oeillets métalliques ou plastiques sont rapportés, de part et d'autre de l'échancrure de la tige, pour permettre le passage du lacet ; ou encore chaque bordure de l'échancrure est renforcée par thermo-soudage d'un matériau plastique technique flexible, par exemple un TPU, et chaque bordure ainsi renforcée est ensuite perforée pour permettre le passage du lacet ;
c) deux séries de crochets, ou mini-sangles, incluant chacune un oeillet passe-lacet, ou non, ou encore de tous autres organes d'accrochage du lacet, sont rapportées par tous moyens appropriés, tels que couture, soudure, rivetage, etc., de part et d'autre de l'échancrure de la tige.

Toutes ces solutions ont en commun l'inconvénient de requérir une ou plusieurs opérations supplémentaires, souvent manuelles, pour obtenir le moyen requis de fermeture de l'article chaussant. Elles nécessitent également des composants ou matériaux supplémentaires, qui, de toute façon, alourdissent la chaussure, ce qui peut ne pas être acceptable dans le cas d'une chaussure de sport performante, par exemple dans le cas d'un sport de raquette comme le tennis. Et, au total, ces solutions renchérissent, d'une manière ou d'une autre, le coût de revient de la paire de chaussures.

La présente invention a pour objet de remédier aux inconvénients précédents, mis en exergue dans le cas d'un article chaussant, mais qui sont existants ou de nature similaire, dès lors qu'il s'agit de lier, attacher, ou relier toute pièce en tissu ou textile, au moyen d'un lien, avec un objet ou une autre partie.

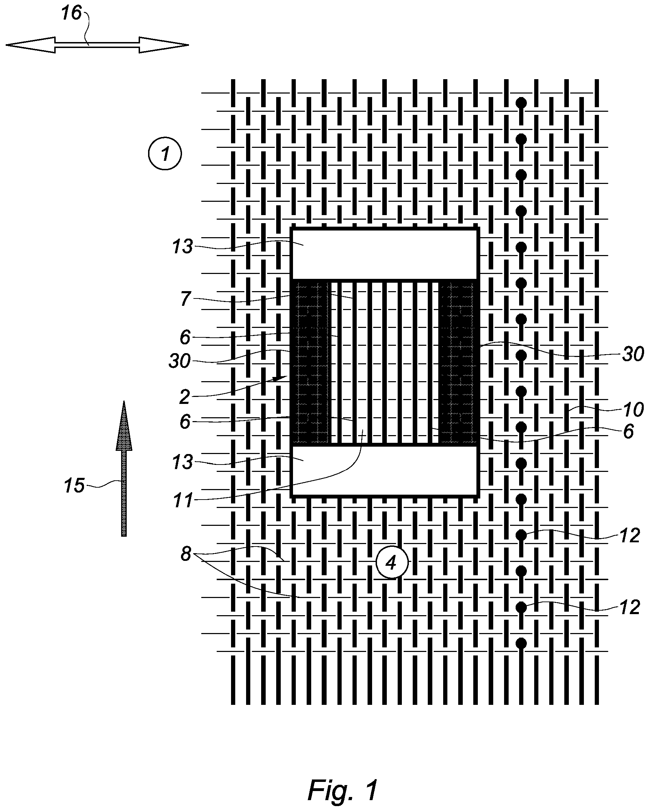

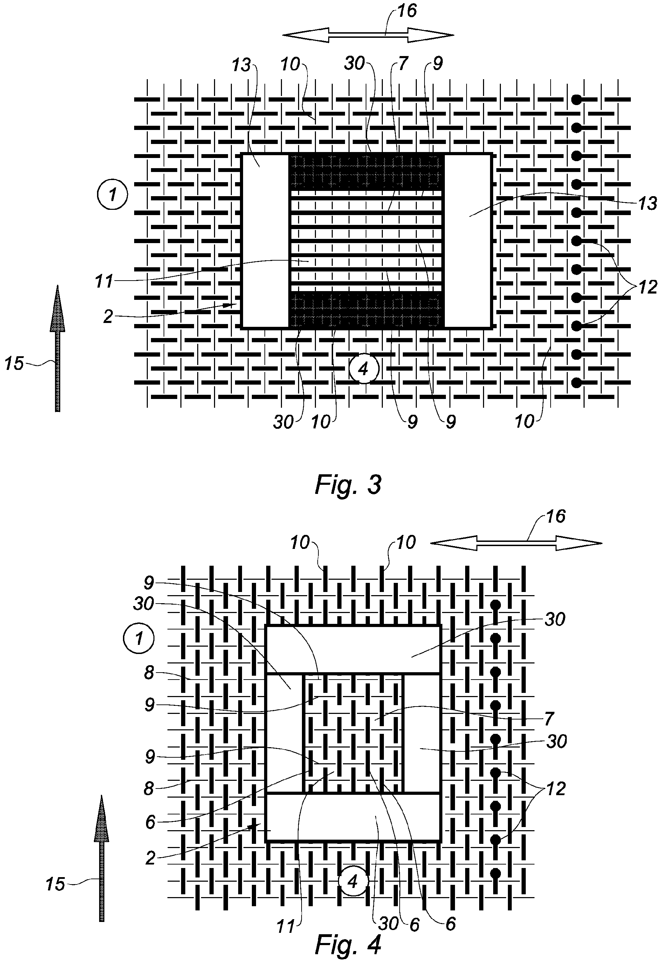

Conformément au brevet DE 1 277 765, une bande textile de ceinture, pour pantalon ou robe, est décrite et montre, par référence au mode d'exécution selon les Figures 1 à 4, un tissu comprenant deux couches élémentaires, l'une extérieure ou supérieure (2), d'armure satin, et l'autre intérieure ou inférieure (1), doublant la couche extérieure de tissu. Comme le montre plus particulièrement la Figure 4, complétée par la Figure 3, plusieurs éléments de liage ou passants (8) avec un lien ou ceinture non représenté (cf. col. 4, lignes 3-5) sont intégrés dans le tissu de la bande textile de ceinture ; ces éléments de liage (8) sont distribués ou décalés les uns par rapport aux autres selon la direction de la trame de la couche extérieure (2), étant observé que, selon la Figure 4, et cf. col. 3, lignes 43 et 48, les fils (3) et (5) représentés en section sont des fils de chaîne. Chaque élément de liage (8) est obtenu, à l'endroit du liage du lien (non représenté) avec le tissu, par le chevauchement libre de plusieurs fils de chaîne (5) de la couche extérieure (2) par deux fils épais de trame (4), de liage car formant ensemble un coulant de liage (13/14), l'un représenté schématiquement à la Figure 4 par un trait pointillé, et l'autre par un trait mixte, ces deux fils de trame et de liage appartenant à la couche intérieure (1) du tissu de la bande textile ; cf. col. 3, lignes 60-2, col. 4, lignes 5-24.

Conformément à DE 1 277 765, chacun des fils épais (4) de trame et de liage, appartenant à la couche intérieure (1) du tissu, présente, une fois tissé, une section ou longueur libre, entre ses jonctions 14 et 17, avec le reste du tissu, au sens où, comme montré et explicité par les Figures 3 et 4, cette section, dont la longueur est égale à la longueur développée du coulant de liage (13/14), ne se trouve pas fixée ou attachée au reste du tissu, par exemple par entrecroisement (lors du tissage) avec les fils de chaîne (5) de la couche extérieure (2). En conséquence, cette section libre de chacun des fils (4) de trame et de liage chevauche un certain nombre (sept selon la Figure 4) de fils de chaîne (5) de la couche extérieure (2), au sens d'un enjambement perpendiculaire et au-dessus de ces derniers, à la manière de l'arche d'un pont.

Conformément à DE 1 277 765, la longueur de la section libre de chacun des fils (4) de liage, entre les jonctions (14) et (17) avec le reste du tissu, est égale à la longueur développée du coulant de liage (13/14), c'est-à-dire perpendiculairement à sa largeur étroite. Comme montré en particulier par la Figure 3, cette longueur est donc beaucoup plus importante que la distance séparant les fils de chaîne (5) de la couche extérieure (2) reliés de part et d'autre du coulant de liage (13/14), en l'occurrence entre les jonctions (14) et (17). Par conséquent, selon DE 1 277 765, le passage dans le coulant de liage (13/14) est déterminé et obtenu uniquement par la boucle lâche formée dans ce dernier, grâce à la longueur importante de la section libre des fils de liage (4) à l'endroit de leur chevauchement des fils de chaîne (5) de la couche supérieure du tissu.

Une solution de liage d'un tissu avec un lien rapporté, décrite/définie par DE 1 277 765, convient bien dans le domaine des vêtements, lorsqu'il s'agit d'attacher une ceinture par exemple à un pantalon ou une robe, portée par un utilisateur. En pareil cas, par exemple lorsque l'utilisateur serre la ceinture, il n'existe pratiquement pas de sollicitation mécanique exercée sur le tissu de la bande textile vers l'extérieur, c'est-à-dire selon une direction orthogonale à la direction d'extension du tissu ou de la bande, par exemple "centrifuge", c'est-à-dire vers l'extérieur du tissu, dans le sens de la couche intérieure vers la couche extérieure du tissu.

Une telle solution ne peut convenir lorsque le lien rapporté exerce sur le tissu, par exemple par traction, par l'intermédiaire des éléments de liage, des sollicitations mécaniques importantes et/ou répétées vers l'extérieur du tissu. En pareil cas, le tissu est susceptible de se rompre, déchirer ou déstructurer, à raison de la faible résistance mécanique de la couche intérieure du tissu, à l'endroit ou à l'aplomb des éléments de liage, construits et obtenus dans la couche extérieure, par "montée" des fils de liage, pris dans la couche intérieure, dans la couche extérieure. Et les branches de chaque élément de liage sont susceptibles de favoriser I'"amorçageʺ de la déstructuration du tissu, en cas de sollicitation mécanique importante et/ou répétée "centrifuge", c'est-à-dire vers l'extérieur du tissu, par l'intermédiaire du lien.

La présente invention a pour objet de remédier aux insuffisances des solutions de liage intégré dans un tissu, dans la perspective d'une résistance mécanique améliorée de ce dernier, en cas de sollicitations mécaniques importantes ou répétées, par l'intermédiaire du lien, vers l'extérieur du tissu.

De ce fait, la présente invention a également pour objet un tissu intégrant des éléments de liage pouvant être utilisés dans de nouveaux contextes, particulièrement exigeants quant à la résistance mécanique, globale ou locale, du tissu.

Un tissu selon la présente invention se caractérise par le fait que :
a) les fils de liage de chaque élément de liage appartiennent à la couche extérieure de tissu, et prédéterminent avec la couche intérieure de tissu, au point ou à l'endroit du chevauchement libre des fils de trame ou des fils de chaîne, par lesdits fils de liage, de chaîne ou de trame, un oeillet pour le passage du lien ;
b) cet oeillet pour le passage du lien est obtenu par déformation et/ou extension des fils de liage à l'endroit du liage au tissu.

Par "chevauchement libre" des fils de chaîne ou de trame par le ou les fil(s) de liage, de trame ou de chaîne, selon le cas, comme déjà montré par le document DE 1 277 765, on entend que chaque fil de liage comprend, à l'endroit du chevauchement, une section ou longueur libre, au sens où celle-ci, comme montré et explicité ci-après par référence aux Figures 1, 2, 3 et 4 annexées à la présente description, ne se trouve pas fixée ou attachée au reste du tissu, par exemple par entrecroisement (lors du tissage) avec les fils de chaîne ou de trame, selon le cas, de la couche extérieure du tissu, ou plus généralement de ce dernier.

L'oeillet obtenu par déformation et/ou extension des fils de liage implique que, comme explicité ci-après par référence aux Figures 1 à 4 annexées à la présente description, que la section libre de chaque fil de liage, considérée précédemment, a une longueur pratiquement égale à la distance séparant dans la direction du liage, selon le cas, le premier fil de chaîne du dernier fil de chaîne chevauché, ou le premier fil de trame du dernier fil de trame chevauché ; moyennant quoi, pour obtenir un coulant de liage, on doit à l'endroit de ce dernier, ou déformer ou étendre le fil de liage, sous réserve de son élasticité, pour obtenir un oeillet dont la section est alors strictement adaptée à celle du lien.

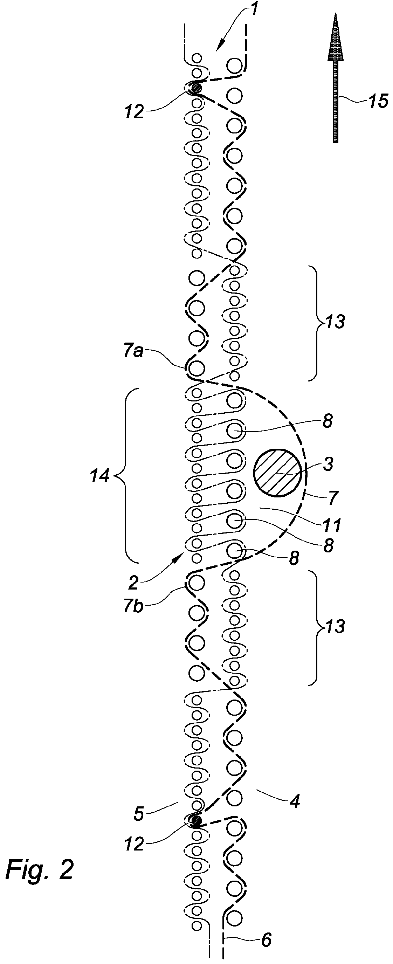

Comme mieux montré par la Figure 2, dans le cas de fils de chaîne de liage (4), formant le coulant (7) de liage, ce dernier comporte deux pieds (7a) et (7b) séparés par une pluralité de fils de trame (8) de la couche extérieure (4). Par référence à la Figure 3, dans le cas de fils de trame de liage (9) formant le coulant (7) de liage, les deux pieds (7a) et (7b) sont séparés par une pluralité de fils de chaîne (10) de la couche extérieure (4).

Grâce à l'invention, chaque coulant pour le passage du lien se trouve mieux ou plus complètement intégré dans la construction du tissu, et la résistance de ce dernier à l'arrachement, perpendiculairement à la ligne de liage, ou au lien, sous l'effet par exemple d'une traction sur ce dernier, se trouve substantiellement améliorée.

De ce fait, un tissu selon la présente invention peut être utilisé dans différentes applications, particulièrement exigeantes quant à la permanence de la construction textile de départ ou de base du tissu, en cas de sollicitations mécaniques importantes ou répétées sur le lien.

Au rang de ces applications, un tissu selon l'invention peut être utilisé pour la fabrication/production d'un article chaussant, notamment chaussure de sport, en particulier pour la pratique d'un sport de raquette, et comprenant une pièce souple de faible épaisseur, telle une tige. En pareil cas, un tissu selon l'invention permet d'obtenir directement, c'est-à-dire sans ajout de pièces ou composants complémentaires, et/ou sans opération supplémentaire ou de reprise, le moyen de fermeture du volume intérieur de la tige, comprenant deux séries d'éléments de laçage, de part et d'autre d'une échancrure de cette même tige, ainsi qu'un lacet reliant ou traversant ces éléments de laçage, en enjambant l'échancrure, dans le tissu lui-même le ou les éléments de liage avec le lien, requis pour la ou les fonctions du même tissu, ou de tout composant ou article ouvré ou manufacturé avec ledit tissu, tel le moyen de fermeture d'un article chaussant évoqué et discuté précédemment.

Les fils de la couche extérieure du tissu, de chaîne et/ou de trame, choisis pour former le coulant de liage, sont contigus ou adjacents les uns aux autres, ou non.

Dans une forme particulière de l'élément de liage, à l'endroit, par exemple au point de liage du tissu, d'une part, plusieurs fils de chaîne de liage de la couche extérieure de tissu chevauchent librement plusieurs fils de trame de la même couche, et d'autre part, plusieurs fils de trame de liage chevauchent librement plusieurs fils de chaîne de la même couche ; mais les fils de chaîne de liage et les fils de trame de liage s'entrelacent eux-mêmes, à la surface ou au-dessous de la couche extérieure, pour préformer ensemble un coulant tissé de liage.

Concernant l'élément de liage proprement dit, préférentiellement sa construction textile est renforcée de différentes manières, pouvant être mises en oeuvre séparément ou en combinaison, de façon à mieux résister mécaniquement aux efforts, importants et/ou répétés, consécutifs à la tension appliquée au lien, par exemple en tirant un lacet pour fermer un article chaussant.

Selon un premier mode d'exécution de l'invention, la couche extérieure de tissu est renforcée localement au-dessous du coulant de liage, par remontée sur la couche extérieure et entrecroisement, par exemple selon une armure prédéfinie, de plusieurs fils de chaîne et/ou de trame de la couche intérieure de tissu, avec des fils de trame et/ou des fils de chaîne de la couche extérieure laissés libres au-dessous du coulant de liage, car chevauchés librement respectivement par les fils de liage, de chaîne et/ou trame.

Selon un deuxième mode d'exécution de l'invention, la couche extérieure de tissu est renforcée localement, selon l'une et/ou l'autre directions de chevauchement pour obtenir le coulant de liage, c'est-à-dire selon la direction de la chaîne et/ou la direction de la trame, et ce d'un côté et/ou de l'autre de l'oeillet, par remontée sur la couche extérieure et entrecroisement, par exemple selon une armure prédéfinie, de plusieurs fils de chaîne et/ou de trame de la couche intérieure de tissu.

Selon un troisième mode d'exécution de l'invention, la couche extérieure de tissu est renforcée localement dans au moins une direction de renfort perpendiculaire à l'une et/ou l'autre directions de chevauchement pour obtenir le coulant de liage, c'est-à-dire perpendiculaire à la direction de la chaîne et/ou la direction de la trame, et ce du côté d'au moins un pied du coulant, par remontée sur la couche extérieure et entrecroisement, par exemple selon une armure prédéfinie, de plusieurs fils de chaîne et/ou de trame de la couche intérieure de tissu.

Selon l'invention, dans le reste du tissu, c'est-à-dire en dehors du ou des éléments de liage, les couches extérieure et intérieure du tissu sont accrochées l'une sur l'autre, selon toute armure d'accrochage prédéfinie.

Différents modes d'accrochage des couches extérieure et intérieure du tissu sont retenus, par exemple :
- par chaîne envers
- par chaîne endroit,
- par chaîne envers et chaîne endroit,
- préférentiellement, par chaîne supplémentaire ou trame supplémentaire.

Préférentiellement, plusieurs ou de multiples éléments de liage se trouvent intégrés au tissu, en étant distribués dans ce dernier selon la direction de la chaîne et/ou la direction de la trame de la couche extérieure du tissu. Par exemple, de manière à répartir dans la surface du tissu les efforts consécutifs à la tension appliquée au lien, par exemple en tirant un lacet pour fermer un article chaussant, les éléments de liage sont décalés les uns par rapport aux autres selon la direction de la chaîne et/ou la direction de la trame de la couche extérieure de tissu.

Selon la présente invention, une pluralité ou multiplicité d'éléments de liage sont intégrés au tissu, en étant distribués sur ou à la surface de la couche extérieure de tissu, selon toute ligne ou trajectoire de liage choisie ou déterminée en fonction de l'application ou utilisation du tissu. Ainsi, il est possible de faire passer un seul et même lien au travers des différents oeillets des éléments de liage respectivement, le lien étant alors attaché ou retenu sur le tissu selon la ligne ou trajectoire fixée par la disposition/distribution des éléments de liage dans la surface du tissu. Ainsi, s'il s'agit d'obtenir un moyen de fermeture d'un article chaussant tel que défini précédemment, on disposera et distribuera les éléments de liage selon deux lignes de liage rectilignes et/ou curvilignes, symétriques ou arrangées symétriquement par rapport à un même axe, en sorte que, après découpe et mise en forme du tissu pour obtenir la tige de l'article chaussant, on obtiendra directement deux séries d'éléments de liage en vis-à-vis, de part et d'autre de l'échancrure présente sur la tige.

Dans la pratique industrielle de l'invention, un tissu tel que défini précédemment est obtenu par mise en oeuvre, ou opération de tissage sur tout métier à tisser approprié, double chaîne. Un métier à tisser du type Jacquard peut être préféré, à raison de la variété infinie du nombre et/ou du positionnement des éléments de liage qu'il permet d'obtenir.

A l'issue d'une opération de tissage avec un tel métier, on obtient une laize ou pièce de tissu selon l'invention, dans laquelle, préférentiellement, une multiplicité de patrons sont distribués et/ou répartis selon la direction de la chaîne et/ou de la trame, chacun de ces patrons servant à l'obtention d'un seul et même composant ou article, et comportant à cette fin une ou plusieurs lignes de liage, telles que définies précédemment, le long de laquelle ou desquelles les éléments de liage sont distribués. Par exemple, pour obtenir le moyen de fermeture d'un article chaussant, en l'occurrence d'une même chaussure, le patron dans lequel sera découpée la tige de cette dernière comprendra deux lignes de liage symétriques par rapport à un axe parallèle à la chaîne ou la trame du tissu, dans la perspective d'obtenir directement, après découpe et mise en forme de la tige, deux séries d'éléments de liage ou laçage en vis-à-vis.

La présente invention concerne tout article ou produit, notamment article chaussant, par exemple pour la pratique d'un sport, en particulier d'un sport de raquette (tennis par exemple), obtenu par mise en oeuvre d'un tissu selon l'invention.

Conséquemment, la caractéristique générale d'un tel article ou produit est de comprendre une pièce souple, de faible épaisseur, telle la tige d'un article chaussant, constituée ou obtenue au moins en partie par ou à partir d'un tissu selon l'invention.

Les applications d'un tissu selon la présente invention sont multiples. Au moyen de celui-ci, on peut obtenir tout article ou produit comprenant ou intégrant au moins une fonction de liage sur lui-même, ou avec un autre objet ou support.

De manière non exhaustive ou limitative, au rang de ces applications, on peut citer les articles chaussants ou chaussures, déjà nommés, en particulier les chaussures de sport ou les chaussures de sécurité, mais aussi les articles de bagagerie, tels les sacs, les équipements de protection individuels, les bâches, et les vêtements.

La présente invention concerne en particulier un article chaussant, par exemple une chaussure de sport, telle qu'une chaussure pour la pratique d'un sport de raquette (tennis par exemple), cet article chaussant comprenant :
- une semelle,
- une tige dont la bordure périphérique inférieure est liée à la semelle,
- un moyen de fermeture du volume intérieur de la tige, comprenant, d'une part un composant en tissu selon l'invention, pouvant être la tige elle-même, ouvré ou agencé pour disposer, de part et d'autre d'une échancrure, deux séries d'éléments de liage en vis-à-vis, et d'autre part un lien reliant les différents éléments de liage en enjambant ladite échancrure.

Le terme "article" ou "produit" réfère à un objet, par exemple manufacturé ou fini, prêt à l'emploi ou à un usage donné, tel un article chaussant, par exemple une chaussure de sport.

Le terme "tissu" réfère de manière générale à un textile ou une étoffe obtenu sur un métier à tisser, et en particulier à un demi-produit, semi-produit, ou pré-produit, qui doit lui-même être travaillé, ouvré ou façonné, pour obtenir un composant, tel une pièce souple, ou directement un article ou produit fini.

Par "fil", il faut comprendre, comme entendu dans l'industrie textile, toute mèche monodimensionnelle, ayant une longueur supérieure à sa largeur et/ou épaisseur, comprenant des filaments, filés, fibres, fils continus ou discontinus, câbles, ou autres, constitués de divers matériaux traditionnels ou techniques, c'est-à-dire présentant des propriétés/caractéristiques fonctionnelles ou améliorées.

S'agissant en particulier des fils de chaîne et/ou des fils de trame du tissu selon l'invention, notamment ceux affectés au liage, ceux-ci seront préférentiellement des fils techniques, comprenant par exemple au moins un matériau mécaniquement résistant, par exemple un polyamide haute ténacité (PA HT), et/ou un para-aramide, ou un carbone. De tels fils techniques peuvent être enduits ou gainés, par exemple avec un polyuréthanne, le cas échéant chargé en céramique.

Les fils de chaîne et/ou les fils de trame, et en particulier les fils de liage, ont individuellement une construction simple, par exemple avec un mono-filament, ou une construction complexe, par exemple par assemblage par torsion de plusieurs fils élémentaires, ou encore par guipage d'un ou plusieurs fils autour d'une âme filaire.

Le terme "pièce souple" réfère à toute pièce telle qu'obtenue par découpe, par tous moyens appropriés (par exemple à l'emporte-pièce, ou découpe laser), repérée ou registrée par rapport au tissu, notamment sur un patron d'une laize de tissu selon l'invention.

Le terme "lien" réfère à un élément flexible et allongé servant à lier ou attacher, quelle que soit sa forme. Les termes "lacet", "corde", "câble", "cordon" réfèrent à des liens considérés par la présente invention.

Le terme "liage" réfère à toute action au moyen d'un lien pour attacher, relier, lier, fixer un objet, produit ou article, avec ou sur lui-même, ou avec un autre objet ou support. Constitue un liage, au sens de l'invention, un laçage, un sanglage, etc.

La présente invention est maintenant décrite, à titre d'exemple, par référence aux dessins annexés, dans lesquels :
- la figure 1 représente, schématiquement, une laize de tissu selon la présente invention, vue de dessus, de son côté extérieur, avec un élément de liage représenté schématiquement en vue de dessus, et à échelle agrandie ;
- la figure 2 représente, toujours schématiquement, vue en coupe dans la direction de la chaîne du tissu, passant au milieu de l'élément de liage, la construction du tissu selon la figure 1 ;
- les figures 3 et 4 représentent, schématiquement, deux variantes d'exécution de l'élément de liage appartenant au tissu selon les figures 1 et 2 ;
- la figure 5 représente, schématiquement, une laize de tissu selon la présente invention, comportant plusieurs patrons, à partir de chacun desquels une pièce de tissu, telle une tige de chaussure, comportant deux séries d'éléments de liage ou laçage, peut être obtenue par découpe puis mise en forme ;
- la figure 6 représente, schématiquement, vue en perspective, une chaussure comportant ou intégrant une tige obtenue selon le mode opératoire schématisé à la figure 5, avec un lien ou lacet reliant les deux séries parallèles d'éléments de liage ou laçage selon les figures 1 et 2, présents sur la chaussure, et directement intégrés dans le tissu de la tige ;
- la figure 7 représente, schématiquement, une vue en coupe selon le plan de coupe VII-VII, figuré à la figure 6, de la chaussure représentée à cette dernière ;
- la figure 8 représente, schématiquement, vue en perspective, une variante de la chaussure représentée aux figures 6 et 7, avec deux séries parallèles d'éléments de liage ou laçage selon la figure 3, présents sur la chaussure et directement intégrés dans le tissu de la tige.

Sur les figures 1 à 5, la direction de la chaîne et celle de la trame sont référencées respectivement 15 et 16.

Conformément aux figures 1 et 2, un tissu 1 selon la présente invention comprend ou intègre au moins un élément de liage 2 avec un lien 3, ce dernier passant de manière libre au travers dudit élément, comme représenté à la figure 2.

Selon l'invention, cet élément de liage 2 est obtenu, à l'endroit du tissu retenu ponctuellement pour le liage du tissu, par la construction textile suivante :
a) le tissu comprend au moins deux couches élémentaires de tissu, superposées, accrochées l'une à l'autre selon toute armure d'accrochage prédéterminée, déterminant selon la surface du tissu de multiples points d'accrochage 12 régulièrement répartis ou distribués.

L'une de ces couches est dite extérieure 4, car du côté du lien, tandis que l'autre dite intérieure 5, double ou supporte la couche extérieure, en sorte que, comme montré plus spécifiquement à la figure 2, le tissu présente une face extérieure, montrée aux figures 1, 3 et 4, à savoir celle de la couche extérieure 4, et une face intérieure, qui est la face extérieure de la couche intérieure 5.

Pour simplifier la représentation des figures 1 à 4, l'armure des tissus constituant les couches extérieure 4 et intérieure 5 est une armure toile, entrecroisant des fils de chaîne 10 et des fils de trame 8, s'agissant de la couche extérieure 4 ; mais, évidemment les couches extérieure 4 et intérieure 5 peuvent avoir toute autre armure, simple ou complexe.
b) Plusieurs fils 6 de chaîne de la couche extérieure 4 de tissu 1, dits de liage, car formant ensemble un coulant 7 de liage, chevauchent ou enjambent librement plusieurs fils de trame 8 de cette même couche extérieure. Ces fils de liage 6 prédéterminent, c'est-à-dire avant que le tissu soit ouvré ou façonné, avec la couche intérieure 2 de tissu, à l'endroit ou au point où ces fils de liage chevauchent les fils de trame 8 de la même couche 4, un oeillet 11 pour le passage du lien 3 ; l'œillet 11 étant obtenu par déformation et/ou extension des fils de liage 6, et le cas échéant de la couche extérieure 5, précisément à l'endroit ou au point retenu par construction sur le tissu pour lier ce dernier.

Aux endroits retenus ou définis sur le tissu, pour lier ce dernier ponctuellement ou point à point, c'est-à-dire ici et là où sont obtenus dans le tissu 1, comme défini et décrit précédemment, les différents éléments de liage 2 représentés sur les dessins en annexe, la présente invention permet d'obvier ou diminuer la déstructuration du tissu 1, sous l'effet des efforts mécaniques importants, et/ou permanents ou répétés, par exemple en traction, appliqués au lien 3 maintenu libre dans les éléments de liage ; comme cela est par exemple le cas pour un laçage de chaussure.

On peut encore renforcer localement chaque élément de liage 2, c'est-à-dire, ou lui-même, et/ou tout ou partie de sa périphérie sur le tissu 1, à savoir sur la couche extérieure 4 de tissu, par remontée sur cette couche extérieure, et entrecroisement, par exemple selon une armure prédéfinie, de plusieurs fils de chaîne et/ou de trame de la couche intérieure 5 de tissu, avec les fils de trame 8 et/ou les fils de chaîne 10 de la couche extérieure 4 de tissu.

De cette manière, on peut encore augmenter la résistance mécanique de chaque élément de liage 2, tout en préservant l'esthétique de ce dernier, au repos et sous traction, sous l'effet du lien lui-même en tension ou traction.

Comme montré aux figures 1 et 2, en remontant certains fils de chaîne de la couche intérieure 5, au-dessous du coulant 7 de liage, on peut ajouter et entrecroiser ces fils, par exemple selon toute armure appropriée, par exemple sergé 3/1, avec des fils de trame 8 laissés libres au-dessous du coulant 7, à raison du chevauchement libre de ces derniers par les fils de chaîne 6 de liage. On obtient ainsi localement un renfort 14 interne de l'œillet 11 de chaque élément de liage 2.

Comme montré uniquement par la figure 1, d'un côté et de l'autre de l'œillet 11, on remonte plusieurs fils de chaîne et/ou de trame de la couche intérieure 5, et on les ajoute et entrecroise avec les fils de chaîne 10 et/ou de trame 8 de la couche extérieure 4, par exemple selon toute armure appropriée, par exemple sergé 3/1. Cette armure se répète selon la direction de chevauchement pour obtenir le coulant 7 de liage, c'est-à-dire celle 15 de la chaîne, moyennant quoi on obtient, d'un côté et de l'autre de l'œillet 11, par exemple de manière adjacente ou à distance proche de ce dernier, un renfort local 30 de la couche extérieure 4 du tissu, de largeur (dans la direction 16 de la trame) appropriée pour augmenter la résistance mécanique de l'élément de liage 2.

Comme montré aux figures 1 et 2, du côté de chaque pied 7a ou 7b du coulant 7, en remontant certains fils de chaîne et/ou de trame de la couche intérieure 5, on peut ajouter et entrecroiser ces fils, selon tout mode approprié, du type point serti en broderie, avec des fils de trame 8 et/ou des fils de chaîne 10 de la couche extérieure 4, situés de part et d'autre du coulant 7, à l'extérieur de ce dernier, par exemple de manière adjacente ou à distance proche du coulant 7. On obtient ainsi un renfort local 13 de la couche extérieure 4 de tissu, dans au moins une direction de renfort perpendiculaire à la direction de chevauchement libre des fils de chaîne 6 de liage, c'est-à-dire dans la direction 16 de la trame, et ce sur une distance dans cette direction au moins égale à la largeur traversante du coulant 7 de liage, et donc de l'œillet 11. Chacun de ces renforts locaux 13 se trouve situé du côté de chaque pied 7a ou 7b du coulant 7, à l'extérieur de ce dernier, ce qui permet aussi de maintenir en position l'élément de liage 2 au sein de la couche extérieure 4 de tissu, quelles que soient l'importance et les répétitions des sollicitations mécaniques transmises par le lien 3 au tissu.

Comme montré en particulier par la figure 2, les fils de chaîne et/ou de trame de la couche intérieure 5 ont par exemple une section inférieure à celle des fils de chaîne 10 et/ou de trame 8 de la couche extérieure 4, à l'exception des zones de renfort 13 des pieds 7a et 7b du coulant 7, dans lesquelles au moins les fils de trame ont une section plus importante. Par ailleurs, toujours dans ces zones de renfort 13, les fils de chaîne de liage 6 de la couche extérieure 4 descendent, par exemple, vers la couche intérieure 5 pour accrocher les couches 4 et 5 de tissu entre elles.

Comme montré par les figures 1 et 2, en dehors des éléments de liage 2, la couche extérieure 4 et la couche intérieure 5 de tissu sont accrochées l'une sur l'autre en différents points d'accrochage 12 répartis, par exemple régulièrement selon toute armure appropriée, à la surface du tissu.

Le tissu 1 représenté schématiquement à la figure 3 diffère de celui représenté aux figures 1 et 2, en ce que chacun des éléments de liage 2 résulte d'une construction différente du tissu, selon laquelle plusieurs fils de trame 9 de la couche extérieure 4 de tissu, dits de liage car formant ensemble un coulant 7 de liage, chevauchent librement plusieurs fils de chaîne 10 de la même couche. Ces fils 9 de trame de liage prédéterminent avec la couche intérieure 5 de tissu, à l'endroit ou au point du chevauchement des fils de chaîne 10 par les fils de trame de liage 9, un oeillet 11 pour le passage du lien 3. Cet oeillet 11 est obtenu par déformation et/ou extension des fils de trame de liage 9, à l'endroit ou au point de liage du tissu 1.

Le tissu 1 représenté schématiquement à la figure 4 diffère de celui représenté aux figures 1 et 2, en ce que chacun des éléments de liage 2 résulte d'une construction différente du tissu 1, selon laquelle, à l'endroit ou au point de liage retenu sur le tissu, d'une part plusieurs fils de chaîne de liage 6 de la couche extérieure 4 de tissu chevauchent librement plusieurs fils de trame 8 de la même couche, et d'autre part, plusieurs fils de trame de liage 9 chevauchent librement plusieurs fils de chaîne 10 de la même couche. Les fils de chaîne de liage 6 et les fils de trame de liage 9 s'entrelacent eux-mêmes selon toute armure appropriée, pour préformer ensemble un coulant 7 tissé de liage.

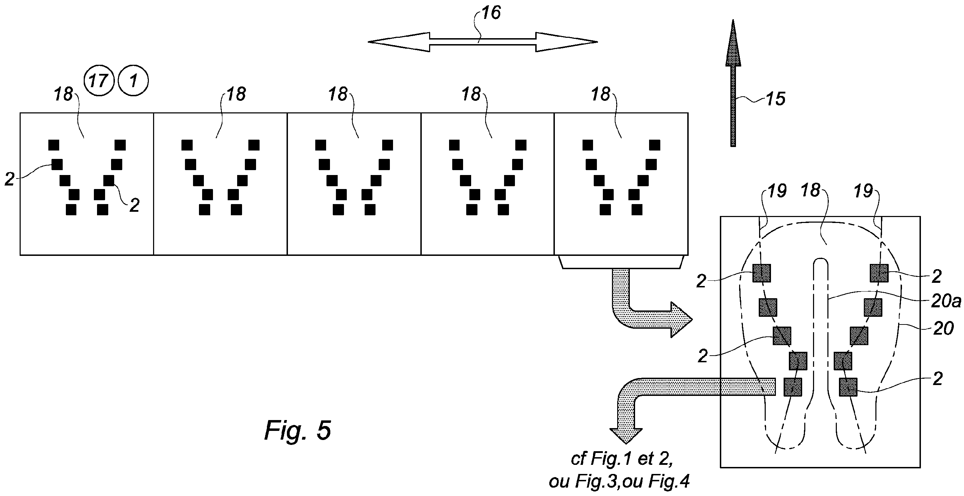

Dans la pratique industrielle de l'invention, avec tout métier à tisser approprié, à double chaîne, de préférence de type Jacquard, convenablement préparé, par une même opération de tissage, on obtient une laize ou pièce de tissu précédemment définie et décrite, schématiquement représentée à la figure 5. Cette laize comporte une multiplicité de patrons 18 distribués et/ou répétés selon la direction 15 de la chaîne et/ou la direction 16 de la trame. Chaque patron 18 sert à l'obtention d'une seule et même pièce 20, par découpe et mise en forme du tissu 1, par exemple pour obtenir la tige 20 d'une chaussure 21, présentant une échancrure 20a. Chaque patron 18 comporte, par exemple, une ou plusieurs lignes 19 de liage, chaque ligne de liage 19 étant la ligne fictive selon laquelle les différents éléments de liage 2 sont distribués ou rassemblés à ou sur la surface du tissu 1, plus précisément sur la surface extérieure de la couche extérieure 4 de ce dernier, pour permettre le passage d'un lien 3 au travers des oeillets 11 des éléments de liage 2 respectivement. Par exemple, comme représenté à la figure 5, chaque patron comporte deux lignes de liage 19 symétriques par rapport à un axe parallèle à la chaîne 15 ou à la trame 16 du tissu.

De manière à répartir les efforts générés par la mise sous tension du lien 3 dans toute la surface du tissu, les éléments de liage 2 intégrés au tissu 1 sont distribués selon la direction 15 de la chaîne et/ou la direction 16 de la trame de la couche extérieure 4 du tissu. Par exemple, à cette fin, les éléments de liage 2 sont décalés les uns par rapport aux autres selon la direction 15 de la chaîne et/ou la direction 16 de la trame.

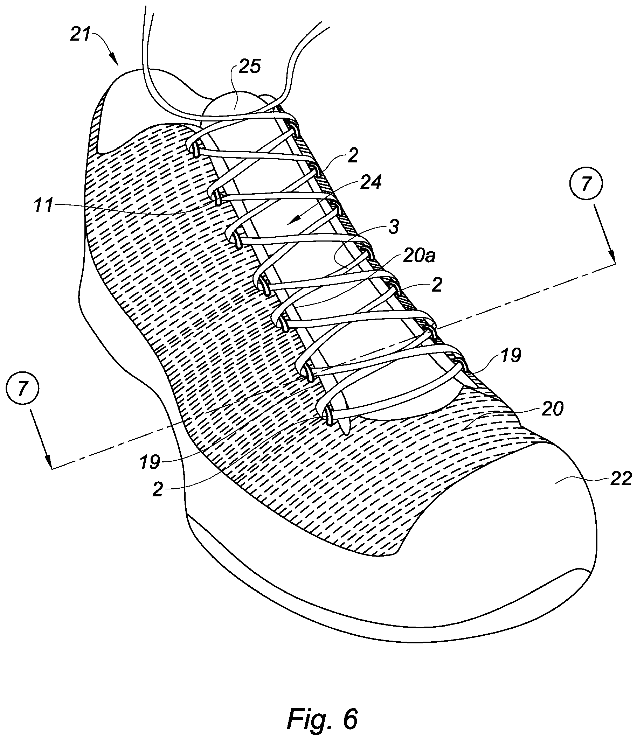

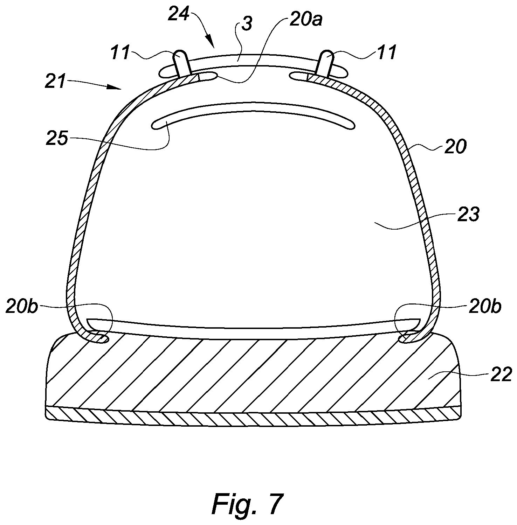

Par référence aux figures 6 et 7, on décrit maintenant un article chaussant 21, par exemple une chaussure de sport, telle qu'une chaussure pour la pratique d'un sport de raquette (tennis par exemple), obtenu à partir d'un tissu selon la présente invention.

L'article chaussant 21 comprend une semelle 22 en matériau du type caoutchouc et une tige 20 en tissu 1 selon la présente invention, dont la bordure périphérique inférieure 20b est liée à la semelle 22, par exemple par collage. Comme montré par le patron 18 à droite de la figure 5, à plat, cette tige 20 a la forme générale d'un fer à cheval, et s'étend symétriquement, de part et d'autre d'une échancrure 20a. Toujours, comme montré par la figure 5, cette tige 20 est obtenue par découpe dans un patron 18, lui-même appartenant à l'origine à une pièce ou laize du tissu 1 selon l'invention. Une fois découpée et mise en forme ou en volume, cette tige 20 comporte deux séries d'éléments de liage 2 ou laçage, ou oeillets 11, disposées respectivement selon les deux lignes de liage, sensiblement parallèles, de part et d'autre de l'échancrure 20a.

Les différents éléments de liage 2, ou laçage, ou plus précisément leurs oeillets 11 respectifs, sont utilisés pour le passage traversant d'un même lien 3, ou lacet ; selon tout mode de laçage approprié, selon lequel le lien 3 va et vient d'un bord à l'autre de l'échancrure 20a et enjambe cette dernière, et ce de la partie basse à la partie haute de ladite échancrure.

Le volume intérieur utile 23 de l'article chaussant 21, défini par la tige 20 avec la semelle 22, est déterminé pour recevoir confortablement et solidariser le pied de l'utilisateur à l'article chaussant.

La tige 20 comporte un moyen de fermeture 24 de ce volume intérieur utile, constitué, de première part par une languette 25, fermant l'échancrure 20a, rapportée, par exemple cousue à l'intérieur de la tige 20, de seconde part par les deux séries parallèles 19 d'éléments de liage 2, ou oeillets 11, en vis-à-vis, de part et d'autre de l'échancrure 20a, et de troisième part par le lien 3, ou lacet, reliant les différents éléments de liage 2, ou oeillets 11, en enjambant l'échancrure 20a. La fonction première de ce moyen de fermeture 24 est de permettre l'introduction ou extraction du pied de l'utilisateur dans ou du volume intérieur utile 23 de l'article chaussant 21, lorsque le lien 3 ou lacet est desserré. Mais le même moyen de fermeture 24, selon le degré de serrage du lien 3, permet aussi d'ajuster l'adaptation de la chaussure au pied de l'utilisateur.

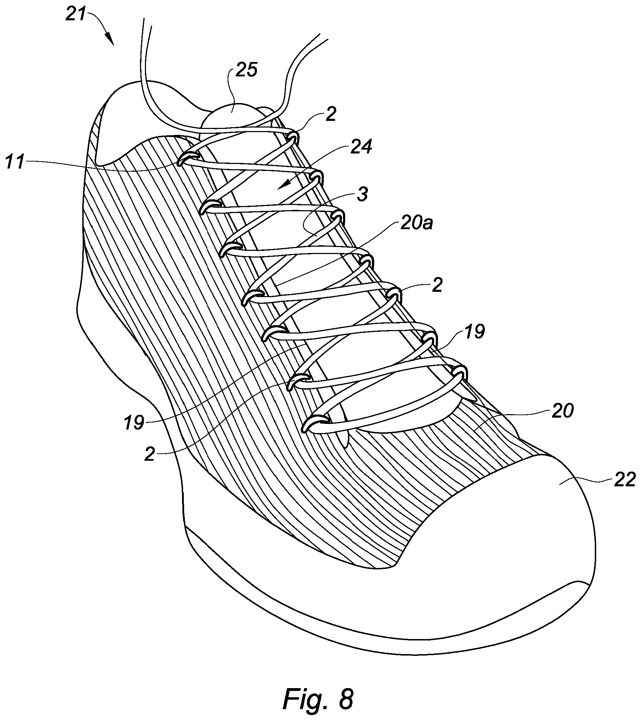

L'article chaussant représenté à la figure 8 diffère de celui représenté aux figures 6 et 7 par le fait que chacun des éléments 2 de liage ou laçage est conforme à la représentation de la figure 3 et la description ci-dessus y afférente.

Le tissu intégrant au moins un élément ou des éléments de liage 2 selon l'invention est, à titre d'exemple, un tissu technique obtenu selon ou conforme à l'invention décrite dans le document WO 2015 079 178, à savoir un tissu technique monolithe ou monobloc, multifonctionnel, car comportant différents secteurs tissés individualisés présentant des propriétés / caractéristiques techniques ou pratiques respectivement différentes d'un secteur à un autre. En pareil cas, selon l'article ou le produit fini dans lequel prend place toute pièce souple obtenue avec le tissu, un ou plusieurs secteurs tissés du même tissu intègrent un ou plusieurs éléments 2 de liage selon l'invention, lesquels sont répartis sur la surface du tissu, en sorte par exemple de définir une ou plusieurs lignes de liage, parcourant un ou plusieurs secteurs tissés du tissu, pour le passage d'un ou plusieurs liens avec ce tissu respectivement.

Pour terminer, la présente invention concerne également, de manière générale, un article chaussant 21 comportant une tige 20 comprenant une pièce de tissu 1 délimitant un volume intérieur 23, un moyen de fermeture 24 dudit volume intérieur constitué par au moins deux séries 19 d'éléments 2 de liage ou laçage, de part et d'autre d'une échancrure 20a de la tige, comblée ou non par une languette 25, et un lien 3, ou lacet, reliant ou traversant lesdits éléments de liage 2, en enjambant ladite échancrure 20a, cet article chaussant étant caractérisé en ce que plusieurs éléments de liage 2 sont intégrés, ou obtenus directement par construction textile, dans le tissu 1 de la tige 20. A cette fin, par exemple, d'une part le tissu 1 comprend au moins deux couches élémentaires, superposées, accrochées l'une à l'autre, l'une extérieure 4 du côté du lien, et l'autre intérieure 5 doublant la couche intérieure, et d'autre part, à l'endroit d'un élément de liage 2, c'est-à-dire là où se trouve l'élément de liage 2, plusieurs fils de liage, formant ensemble un coulant 7 de liage, appartenant à la chaîne ou à la trame du tissu 1, chevauchent librement plusieurs fils de trame 8 ou de chaîne 10 de la couche extérieure 4 du tissu 1. A titre d'exemple, les fils de liage, c'est-à-dire ceux du coulant de liage 7 sont pris dans la couche intérieure 5 ou dans la couche extérieure 4 du tissu 1, ou sont eux-mêmes des fils de liage de ces deux couches 4 et 5 du tissu 1.

De manière préférentielle, le fil de liage 6 ou 9 d'un élément de liage 2 est considéré comme appartenant à la couche extérieure 4 lorsqu'il possède plus de connexions mécaniques avec la couche extérieure 4 qu'avec la couche intérieure 5, avantageusement au moins deux fois plus de connexions mécaniques avec la couche extérieure 4 qu'avec la couche intérieure 5, voire trois fois ou cinq fois plus. A titre d'exemple, la figure 2 montre que le fil de chaîne 6 de la couche extérieure 4 est lié à la couche extérieure 4. Ce fil de chaîne 6 vient en contact ponctuel avec la couche intérieure 5 pour accrocher les deux couches élémentaires de tissu. Comme indiqué précédemment, le fil de chaîne 6 de la couche extérieure 4 peut également se lier avec la couche intérieure 5 pour renforcer la couche intérieure 5 et de préférence lors de la formation des pieds du coulant de liage 7. Le ou les fils de trame et les fils de chaîne formant la couche extérieure 4 ou la couche intérieure 5 sont très majoritairement liés entre eux en comparaison d'éventuelles liaisons mécaniques avec l'autre couche, par exemple cela représente au moins 90% des liaisons.

Comme illustré à la figure 2, lors de la formation du coulant de liage 7, le fil de liage 6 ou 9 définit deux pieds qui sont formés par la fixation du fil de liage 6 ou 9 avec le fil de trame ou de chaîne de la couche extérieure 4 ou intérieure 5. Lors du chevauchement libre du fil de liage 6 ou 9, entre les deux pieds, le fil de liage n'est pas lié mécaniquement à la couche extérieure 4. Il est possible de déformer et/ou d'étendre le fil de liage 6 ou 9 pour définir l'oeillet. Lors de la déformation et/ou de l'extension, le fil de liage 6 ou 9 se décale de la surface de la couche extérieure 4. De manière plus réaliste, la couche extérieure 5 et la couche intérieure 4 se déforment également de manière opposée afin de définir l'œillet.

Il apparaît également que la définition de l'œillet est avantageusement réalisée partiellement par déformation de la couche extérieure pour pouvoir insérer le lien 3. En d'autres termes, lorsque le lien n'est pas dans l'oeillet, l'œillet se referme c'est-à-dire que le coulant de liage 7 se rapproche de la couche extérieure 4 dans la zone de chevauchement libre. Cette configuration est totalement différente de celle présentée dans le document DE 1 277 765 qui propose la formation d'un passant formé par un fil nettement plus long que son équivalent intervenant dans la formation d'une couche de tissu. Ce surplus de fil fragilise la cohésion mécanique et rend le passant plus facilement susceptible de déchirure dans les zones de liaison mécanique. Cette configuration est également différente d'une architecture présentée dans le document US 236,059 et qui prévoit que la forme de la cartouchière soit maintenue à tout moment.

La formation de l'œillet par déformation et/ou extension des fils de liage permet d'avoir un fil de liage 6 ou 9 qui possède sensiblement la même longueur entre les deux pieds lorsque le fil de liage chevauche librement la couche extérieure en comparaison d'un fil de liage lié continûment à la couche extérieure. Cette configuration permet de faciliter la réalisation du tissu car le fil de chaîne ou de trame formant le fil de liage est tissé sans modifier fortement le fonctionnement du métier à tisser. Par exemple, le surplus de longueur du fil de liage est avantageusement inférieur à 20% de préférence inférieur à 10% en comparaison du même fil définissant la couche extérieure 4 entre deux pieds séparés d'une même distance.

Dans un mode de réalisation préférentiel, le coulant de liage 7 est formé d'une part par le fil de liage 6 ou 9 qui peut être un fil de chaîne ou un fil de trame et d'autre part par l'autre fil formant la couche extérieure. En d'autres termes, les fils de trame et de chaîne formant la couche extérieure se séparent pour former les deux bords opposés du coulant de liage comme cela est illustré à la figure 2. Dans le mode de réalisation illustré à la figure 2, le coulant de liage 7 peut être formé par un seul type de fil, c'est-à-dire le fil de liage en saillie de la couche extérieure 4. L'autre portion du coulant de liage 7 formée par la couche extérieure 4 peut être formée par un seul type de fil ou éventuellement par remontée d'un fil de la couche intérieure 5.

Dans le mode de réalisation illustré à la figure 2, le pas de répétition des fils de trame de la couche intérieure 5 est inférieur au pas de répétition des fils de trame de la couche extérieure 4, par exemple deux fois inférieur. Il peut en être de même pour les fils de chaîne. Il est alors avantageux d'utiliser des fils de trame et/ou des fils de chaîne qui possèdent des diamètres différents. La couche intérieure présente une armure plus dense que celle de la couche extérieure de sorte que la couche intérieure possède une résistance mécanique plus importante que celle de la couche extérieure. La tenue mécanique au niveau de l'œillet est améliorée au moyen de la résistance mécanique accrue provenant de la couche intérieure. Comme indiqué plus haut, il est avantageux d'avoir une armure plus dense à proximité immédiate du coulant de liage pour renforcer la tenue mécanique de l'œillet.

## Revendications

1. Tissu (1) comprenant au moins deux couches élémentaires de tissu, superposées, accrochées (12) l'une à l'autre, l'une extérieure (4), et l'autre intérieure (5) doublant la couche extérieure de tissu, et intégrant plusieurs éléments de liage (2) avec un lien (3), distribués selon une ligne de liage (19) sur la surface de la couche extérieure (4) et décalés les uns par rapport aux autres selon la direction (15) de la chaîne et/ou la direction (16) de la trame de la couche extérieure (4) de tissu, chaque élément de liage (2) étant obtenu, à l'endroit du liage du tissu, soit par le chevauchement libre de plusieurs fils de trame (8) de la couche extérieure (4) par plusieurs fils (6) de chaîne, dits de liage car formant ensemble un coulant (7) de liage, soit par le chevauchement libre de plusieurs fils de chaîne (10) de la couche extérieure (4) par plusieurs fils de trame (9), dits de liage car formant ensemble un coulant (7) de liage,
**caractérisé en ce que** les fils de liage (6 ou 9) de chaque élément de liage (2) appartiennent à la couche extérieure (4) de tissu, et prédéterminent avec la couche intérieure (5) de tissu, au point de chevauchement libre des fils de trame (8) ou des fils de chaîne (10) un oeillet (11) pour le passage du lien (3), obtenu par déformation et/ou extension desdits fils de liage (6 ou 9) à l'endroit du liage au tissu.

2. Tissu (1) selon la revendication 1, **caractérisé en ce que** le coulant (7) de liage comporte deux pieds (7a) et (7b) séparés par une pluralité de fils de trame (8) de la couche extérieure (4), ou par une pluralité de fils de chaîne (10) de la couche extérieure (4).

3. Tissu (1) selon l'une quelconque des revendications précédentes, **caractérisé en ce que** les fils de chaîne et/ou de trame de la couche intérieure (5) de tissu ont une section inférieure à la section des fils de chaîne (10) et/ou de trame (8) de la couche extérieure (4).

4. Tissu (1) selon l'une quelconque des revendications précédentes, **caractérisé en ce que**, s'agissant de l'élément de liage (2), la couche extérieure (4) de tissu est renforcée localement (30), selon l'une et/ou l'autre direction de chevauchement pour obtenir le coulant (7) de liage, d'un côté et/ou de l'autre de l'œillet (11), par remontée sur la couche extérieure et entrecroisement avec les fils de la couche extérieure (4) de plusieurs fils de chaîne et/ou trame de la couche intérieure (5) de tissu.

5. Tissu (1) selon l'une quelconque des revendications précédentes, **caractérisé en ce que**, s'agissant de l'élément de liage (2), la couche extérieure (4) de tissu est renforcée localement (13) dans au moins une direction de renfort perpendiculaire à l'une et/ou à l'autre direction de chevauchement pour obtenir le coulant (7) de liage, du côté d'au moins un pied (7a, 7b) du coulant 7, par remontée sur la couche extérieure et entrecroisement avec les fils de la couche extérieure (4) de plusieurs fils de chaîne et/ou trame de la couche intérieure (5) de tissu.

6. Tissu selon l'une quelconque des revendications précédentes, **caractérisé en ce qu'**elle comporte une multiplicité de patrons (18) distribués et/ou répétés selon la direction (15) de la chaîne et/ou la direction (16) de la trame, chaque patron (18) comportant une ou plusieurs lignes (19) de liage, notamment deux lignes de liage symétriques par rapport à un axe parallèle à la chaîne (15) ou la trame (16) du tissu.

7. Article ou produit, notamment article chaussant (21), par exemple pour la pratique d'un sport, en particulier d'un sport de raquette, **caractérisé en ce qu'**il comprend au moins une pièce souple, de faible épaisseur, par exemple une tige (20) d'un article chaussant (21), constituée ou obtenue au moins en partie par ou à partir d'un tissu selon l'une quelconque des revendications 1 à 5.

8. Article chaussant (21) selon la revendication précédente, **caractérisé en ce qu'**un moyen de fermeture du volume intérieur de la tige (20) comprend deux séries (19) d'oeillets (11) de laçage, directement obtenus ou intégrés dans le tissu de la tige (20), de part et d'autre d'une échancrure (20a) de cette même tige (20), ainsi qu'un lacet (3) traversant lesdits oeillets de laçage, en enjambant l'échancrure.

## Patentansprüche

1. Gewebe (1), umfassend mindestens zwei einzelne Gewebelagen, die übereinander liegen und aneinander gehängt (12) sind, eine äußere (4) und eine innere (5), die die äußere Gewebelage auskleidet und mehrere Bindeelemente (2) mit einem Band (3) integriert, die entlang einer Bindelinie (19) auf der Oberfläche der äußeren Lage (4) verteilt sind und in Richtung (15) der Kette und/oder in Richtung (16) des Schusses der äußeren Gewebelage (4) gegeneinander versetzt sind, wobei jedes Bindeelement (2) an der Bindestelle des Gewebes entweder durch freie Überlappung mehrerer Schussfäden (8) der äußeren Lage (4) durch mehrere Kettfäden (6) erhalten wird, die als Bindefäden bezeichnet werden, da sie zusammen eine Bindeschlaufe (7) bilden, oder durch freie Überlappung mehrerer Kettfäden (10) der äußeren Lage (4) durch mehrere Schussfäden (9), die als Bindefäden bezeichnet werden, da sie zusammen eine Bindeschlaufe (7) bilden.
**dadurch gekennzeichnet, dass** die Bindefäden (6 oder 9) jedes Bindeelements (2) zur äußeren Gewebelage (4) gehören und mit der inneren Gewebelage (5) am freien Überlappungspunkt der Schussfäden (8) oder der Kettfäden (10) eine Öse (11) für den Durchgang des Bands (3) vorgeben, die durch Verformung und/oder Streckung der Bindefäden (6 oder 9) an der Bindestelle an das Gewebe erhalten wird.

2. Gewebe (1) nach Anspruch 1, **dadurch gekennzeichnet, dass** die Bindeschlaufe (7) zwei Füße (7a) und (7b) umfasst, die durch eine Vielzahl von Schussfäden (8) der äußeren Lage (4) oder durch eine Vielzahl von Kettfäden (10) der äußeren Lage (4) getrennt sind.

3. Gewebe (1) nach einem der vorherigen Ansprüche, **dadurch gekennzeichnet, dass** die Kett- und/oder Schussfäden der inneren Gewebelage (5) einen Querschnitt haben, der kleiner ist als der Querschnitt der Kett- (10) und/oder Schussfäden (8) der äußeren Lage (4).

4. Gewebe (1) nach einem der vorherigen Ansprüche, **dadurch gekennzeichnet, dass** in Bezug auf das Bindeelement (2) die äußere Lage (4) des Gewebes in der einen und/oder der anderen Überlappungsrichtung zum Erhalt der Bindeschlaufe (7) auf der einen Seite und/oder auf der anderen Seite der Öse (11) durch Hochziehen mehrerer Kett- und/oder Schussfäden der inneren Lage (5) des Gewebes auf die äußere Lage und Verflechten mit den Fäden der äußeren Lage (4) lokal verstärkt (30) ist.

5. Gewebe (1) nach einem der vorherigen Ansprüche, **dadurch gekennzeichnet, dass** in Bezug auf das Bindeelement (2) die äußere Lage (4) des Gewebes in mindestens einer Verstärkungsrichtung senkrecht zu der einen und/oder anderen Überlappungsrichtung zum Erhalt der Bindeschlaufe (7) auf der Seite mindestens eines Fußes (7a, 7b) der Bindeschlaufe (7) durch Hochziehen mehrerer Kett- und/oder Schussfäden der inneren Gewebelage (5) auf die äußere Lage und Verflechten mit den Fäden der äußeren Lage (4) lokal verstärkt (13) ist.

6. Gewebe nach einem der vorherigen Ansprüche, **dadurch gekennzeichnet, dass** es eine Vielzahl von Mustern (18) umfasst, die in Richtung (15) der Kette und/oder in Richtung (16) des Schusses verteilt sind und/oder sich wiederholen, wobei jedes Muster (18) eine oder mehrere Bindelinien (19) umfasst, insbesondere zwei Bindelinien, die in Bezug auf eine Achse parallel zur Kette (15) oder zum Schuss (16) des Gewebes symmetrisch sind.

7. Artikel oder Produkt, insbesondere Schuhwerk (21) zum Beispiel zur Ausübung eines Sports, insbesondere eines Rückschlagspiels, **dadurch gekennzeichnet, dass** es mindestens einen nachgiebigen Teil mit geringer Dicke wie zum Beispiel einen Schaft (20) eines Schuhwerks (21) umfasst, der mindestens zum Teil aus oder ausgehend von einem Gewebe nach einem der Ansprüche 1 bis 5 besteht oder erhalten wurde.

8. Schuhwerk (21) nach dem vorherigen Anspruch, **dadurch gekennzeichnet, dass** ein Mittel zum Verschließen des Innenvolumens des Schafts (20) zwei Reihen (19) von Schnürösen (11) umfasst, die auf beiden Seiten eines Ausschnitts (20a) dieses Schafts (20) direkt im Gewebe des Schafts (20) ausgebildet oder darin integriert sind, sowie einen Schnürsenkel (3), der die Schnürösen durchläuft, indem er den Ausschnitt überbrückt.

## Claims

1. Fabric (1) comprising at least two superposed individual layers of fabric, secured (12) to one another, one an outer layer (4), and the other an inner layer (5) lining the outer layer of fabric, and integrating several binding parts (2) with a tie (3), distributed along a securing line (19) on the surface of the outer layer (4) and offset from one another in the warp direction (15) and/or the weft direction (16) of the outer layer (4) of fabric, each binding part (2) being obtained, at the binding location of the fabric, either by free overlap of several weft threads (8) of the outer layer (4) by several warp threads (6), called binding threads as they together form a binding loop (7), or by free overlap of several warp threads (10) of the outer layer (4) by several weft threads (9), called binding threads as they together form a binding loop (7),
**characterised in that** the binding threads (6 or 9) of each binding part (2) belong to the outer layer (4) of fabric and predefine, with the inner layer (5) of fabric, an eyelet (11) for passage of the tie (3), at the place where free overlap of the weft threads (8) or of the warp threads (10) takes place, obtained by deformation and/or extension of said binding threads (6 or 9) at the place of binding to the fabric.

2. Fabric (1) according to claim 1, **characterised in that** the binding loop (7) comprises two feet (7a) and (7b) separated by a plurality of weft threads (8) of the outer layer (4) or by a plurality of warp threads (10) of the outer layer (4).

3. Fabric (1) according to any one of the foregoing claims, **characterised in that** the warp and/or weft threads of the inner layer (5) of fabric have a smaller cross-section than the cross-section of the warp threads (10) and/or weft threads (8) of the outer layer (4).

4. Fabric (1) according to any one of the foregoing claims, **characterised in that**, as regards the binding part (2), the outer layer (4) of fabric is locally strengthened (30), in one and/or the other direction of overlap to obtain the binding loop (7), on one and/or the other side of the eyelet (11), by raising several warp and/or weft threads of the inner layer (5) of fabric onto the outer layer and interweaving with the threads of the outer layer (4).

5. Fabric (1) according to any one of the foregoing claims, **characterised in that**, as regards the binding part (2), the outer layer (4) of fabric is locally strengthened (13) in at least one reinforcement direction perpendicular to one and/or the other direction of overlap to obtain the binding loop (7), on the side where at least one foot (7a, 7b) of the loop (7) is located, by raising several warp and/or weft threads of the inner layer (5) of fabric onto the outer layer and interweaving with the threads of the outer layer (4).

6. Fabric according to any one of the foregoing claims, **characterised in that** it comprises a multiplicity of templates (18) distributed and/or repeated in the warp direction (15) and/or the weft direction (16), each template (18) comprising one or more binding lines (19), in particular two binding lines symmetrical with respect to a direction parallel to the warp (15) or the weft (16) of the fabric.

7. Article or product, in particular an item of footwear (21), for example for pursuit of a sport, in particular a racket sport, **characterised in that** it comprises at least a flexible part, of small thickness, for example a upper (20) of a footwear (21), at least partially formed by or obtained from a fabric according to any one of claims 1 to 5.

8. Footwear (21) according to the foregoing claim, **characterised in that** a means for closing the inner volume of the upper (20) comprises two series (19) of lacing eyelets (11), directly obtained or integrated in the fabric of the upper, on each side of an indent (20a) of this same upper (20), and a lace (3) passing through said lacing eyelets, straddling the indent.
